(19)

Europäisches Patentamt
European Patent Office
Office européen des brevets

(11)  EP 3 614 306 B1

# (12) FASCICULE DE BREVET EUROPEEN

(45) Date de publication et mention de la délivrance du brevet:
**07.06.2023  Bulletin 2023/23**

(21) Numéro de dépôt: **19306028.2**

(22) Date de dépôt: **23.08.2019**

(51) Classification Internationale des Brevets (IPC):
**G06V 20/64** *(2022.01)*    **G06V 40/16** *(2022.01)*

(52) Classification Coopérative des Brevets (CPC):
**G06V 20/653; G06V 40/164; G06V 40/172**

(54) **PROCÉDÉ DE LOCALISATION ET D'IDENTIFICATION DE VISAGE ET DE DÉTERMINATION DE POSE, À PARTIR D'UNE VUE TRIDIMENSIONNELLE**

VERFAHREN ZUR GESICHTSLOKALISIERUNG UND -IDENTIFIZIERUNG UND ZUR HALTUNGSBESTIMMUNG ANHAND EINER 3D-ANSICHT

METHOD FOR FACIAL LOCALISATION AND IDENTIFICATION AND POSE DETERMINATION, FROM A THREE-DIMENSIONAL VIEW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2018  FR 1857623**

(43) Date de publication de la demande:
**26.02.2020  Bulletin 2020/09**

(73) Titulaire: **Idemia Identity & Security France 92400 Courbevoie (FR)**

(72) Inventeur: **ROMDHANI, Sami 92130 ISSY LES MOULINEAUX (FR)**

(74) Mandataire: **Idemia 2, place Samuel de Champlain 92400 Courbevoie (FR)**

(56) Documents cités:
**US-B2- 7 436 988**

- **NAIR P ET AL: "3-D Face Detection, Landmark Localization, and Registration Using a Point Distribution Model", IEEE TRANSACTIONS ON MULTIMEDIA, IEEE SERVICE CENTER, PISCATAWAY, NJ, US, vol. 11, no. 4, 1 juin 2009 (2009-06-01), pages 611-623, XP011346613, ISSN: 1520-9210, DOI: 10.1109/TMM.2009.2017629**

- **A-NASSER ANSARI ET AL: "3D Face Mesh Modeling from Range Images for 3D Face Recognition", IMAGE PROCESSING, 2007. ICIP 2007. IEEE INTERNATIONAL CONFERENCE ON, IEEE, PI, 1 septembre 2007 (2007-09-01), pages IV-509, XP031158767, ISBN: 978-1-4244-1436-9**

- **LI DEQIANG ET AL: "A central profile-based 3D face pose estimation", PATTERN RECOGNITION, vol. 47, no. 2, 8 août 2013 (2013-08-08), pages 525-534, XP028759979, ISSN: 0031-3203, DOI: 10.1016/J.PATCOG.2013.07.019**

- **MALASSIOTIS S ET AL: "Robust real-time 3D head pose estimation from range data", PATTERN RECOGNITION, ELSEVIER, GB, vol. 38, no. 8, 1 août 2005 (2005-08-01), pages 1153-1165, XP027610828, ISSN: 0031-3203 [extrait le 2005-08-01]**

- **BAGCHI PARAMA ET AL: "A robust analysis, detection and recognition of facial features in 2.5D images", MULTIMEDIA TOOLS AND APPLICATIONS, KLUWER ACADEMIC PUBLISHERS, BOSTON, US, vol. 75, no. 18, 9 octobre 2015 (2015-10-09), pages 11059-11096, XP036046575, ISSN: 1380-7501, DOI: 10.1007/S11042-015-2835-7 [extrait le 2015-10-09]**

## Description

## DOMAINE TECHNIQUE DE L'INVENTION

L'invention s'inscrit dans le domaine du traitement d'images tridimensionnelles et notamment d'images comprenant un ou plusieurs visages d'individus.

L'invention trouve une première application pour la détection de visage et la détermination de la pose du visage d'un individu sur une image acquise, et une deuxième application pour l'identification d'un individu à l'aide d'une image frontalisée de son visage.

## ETAT DE LA TECHNIQUE

La détermination de la pose du visage est utile pour de nombreuses applications. Par pose d'un visage, on entend sa position par rapport à une vue de face, sur une image acquise par un capteur.

A titre d'exemple, un système d'assistance à la conduite peut émettre une alerte lorsqu'un conducteur de véhicule n'est pas dans une position de face qui lui permet de bien regarder la route.

Il peut également être nécessaire de déterminer la pose du visage sur une vue d'un individu au cours d'un algorithme d'identification de l'individu, au cours duquel on évalue la ressemblance entre une vue de référence de l'individu et une vue acquise. En effet, la reconnaissance de visage fonctionne de façon optimale lorsque la vue acquise et la vue de référence sont centrées et de face, car c'est dans une position centrée et de face que la forme du visage est la plus visible.

Cependant, il n'est souvent pas possible d'obtenir une vue centrée de face du visage lors d'une identification, notamment lorsque l'individu ne participe pas volontairement à sa propre identification, par exemple dans un contexte d'images de surveillance. Il existe donc des algorithmes pour « frontaliser » une vue acquise de visage, afin d'obtenir une vue centrée et de face.

Cette frontalisation nécessite un traitement de la vue acquise pour déterminer la pose du visage. La connaissance de la pose, de la forme et de la texture du visage permet de générer une vue frontalisée.

Le document par NAIR et al. : « 3-D Face Detection, Landmark Localization, and Registration Using a Point Distribution Model », IEEE TRANSACTIONS ON MULTIMEDIA, IEEE SERVICE CENTER, PISCATAWAY, NJ, US, vol. 11, no. 4, 1 juin 2009 (2009-06-01), pages 611-623, ISSN : 1520-9210, DOI : 10.1109/TMM.2009.2017629, divulgue un tel procédé de détection et segmentation de visages.

Il est connu de déterminer la pose tridimensionnelle du visage sur une image bidimensionnelle de visage, la pose ayant la forme d'une matrice de rotation et d'un vecteur de translation. Un algorithme connu consiste à comparer la position de points caractéristiques de visage sur l'image bidimensionnelle à des points caractéristiques d'un gabarit de visage, et à identifier une rotation et une translation du gabarit de visage qui minimisent la distance entre les points caractéristiques.

Toutefois, cette solution nécessite d'essayer un nombre potentiellement important de rotations et de translations afin de parvenir à une bonne estimation de la pose, ce qui requiert beaucoup de ressources et de temps de calcul. L'estimation de pose tridimensionnelle à partir d'une vue bidimensionnelle est de surcroît peu précise. L'algorithme ne peut pas vérifier de manière autonome si l'estimation de pose est juste.

De plus, cette solution ne peut être utilisée qu'à partir d'une image bidimensionnelle de visage bénéficiant d'une bonne visibilité.

Il est connu de l'état de la technique, par exemple du document US 7 436 988 B2, de rechercher un bout du nez au sein d'une image tridimensionnelle dans laquelle une zone correspondant à un visage a déjà été détectée. Des algorithmes de détection de visage sont appliqués sur un maillage tridimensionnel, puis une analyse en composantes principales est mise en oeuvre pour réaliser une symétrisation d'une zone de visage détectée. Un bout du nez est détecté à partir du visage symétrisé pour parachever la détermination de la pose du visage.

Toutefois, ce procédé de l'état de la technique ne donne pas satisfaction dans le cas où le maillage tridimensionnel acquis comporte du « bruit » de détection, c'est-à-dire des éléments visibles autres qu'un visage dans la scène photographiée. Il peut ainsi être nécessaire de réaliser un pré-traitement du maillage tridimensionnel, afin d'isoler un visage.

## PRESENTATION GENERALE DE L'INVENTION

Il existe donc un besoin pour un procédé de détection de visage et de détermination de la pose du visage détecté qui soit d'efficacité accrue, tout en ayant un coût de calcul raisonnable.

La détection de visage et la détermination de pose doivent demeurer efficaces même à partir d'une image tridimensionnelle prise en entrée qui comprend des éléments parasites en complément du visage, ou un visage mal cadré.

On recherche ainsi un procédé de détection de visage et de détermination de pose qui soit robuste et ne requière pas de pré-traitement pour isoler un visage dans l'image tridimensionnelle prise en entrée.

Il existe un besoin additionnel pour un procédé de génération d'une vue frontalisée qui soit efficace même à partir d'une vue du visage qui ne bénéficie pas de conditions de visibilité optimales.

On recherche également un procédé d'identification d'un individu à partir d'une vue tridimensionnelle qui produise des résultats fiables tout en ayant un coût de calcul raisonnable.

A ce titre, l'invention concerne, selon un premier aspect, un procédé de détection de visage et de détermination de pose de visage, à partir d'un maillage tridimensionnel comprenant une pluralité de sommets tridimensionnels et comprenant en outre des éléments de surface entre lesdits sommets formant une surface tridimensionnelle, le procédé comprenant les étapes suivantes exécutées par une unité de traitement :

détermination d'une carte de courbure de la surface tridimensionnelle, des points de la carte de courbure correspondant aux points de la surface tridimensionnelle,

repérage, dans la carte de courbure, d'un bout du nez au niveau duquel la surface tridimensionnelle présente une courbure prédéterminée,

à partir du maillage tridimensionnel centré sur le bout du nez, détermination d'une pose de visage, la pose étant définie par des coordonnées du bout du nez, par un premier angle de rotation du visage autour d'un premier axe, par un deuxième angle de rotation du visage autour d'un deuxième axe, et par un troisième angle de rotation du visage autour d'un troisième axe,

délimitation d'une zone de visage constituée de sommets tridimensionnels du maillage sélectionnés en fonction de leur position par rapport au bout du nez, et comparaison entre la zone de visage délimitée et un gabarit de visage de référence comprenant un maillage tridimensionnel pré-enregistré de visage moyen, un résultat de la comparaison permettant de valider une détection d'un visage réel dans le maillage tridimensionnel et de valider la pertinence du bout du nez.

Ainsi, dans le procédé de l'invention, le bout du nez est recherché en utilisant une carte de courbure de la surface tridimensionnelle du maillage, puis est utilisé comme base pour la détermination de pose. Les trois angles de rotation constitutifs de la pose sont aisément détectables en utilisant le bout du nez comme point caractéristique.

De plus, le procédé de l'invention comprend la délimitation d'une zone de visage à partir de la position du bout du nez, puis une comparaison avec un gabarit de référence. La détection de visage sur la base du bout du nez est simple et rapide ; de façon optionnelle, si la détection de visage n'est pas validée, il est aisé de réitérer la détection de visage à partir d'un autre candidat de bout du nez. Le procédé de l'invention présente ainsi une robustesse améliorée.

De manière avantageuse et facultative, le procédé présente les caractéristiques suivantes, prises seules ou en l'une quelconque de leurs combinaisons techniquement possibles :

-    le repérage de bout du nez est mis en oeuvre sans détection préalable d'une zone de visage dans le maillage tridimensionnel ni dans la carte de courbure.

En effet, la zone de visage est préférentiellement détectée à partir du bout du nez détecté et la présence d'un visage est vérifiée à ce stade, sans qu'il n'ait été nécessaire d'effectuer une vérification de présence de visage préalablement à la détection du bout du nez ;

-    lors de l'étape de détermination de carte de courbure, une première carte de courbure est établie pour une courbure moyenne et une deuxième carte de courbure est établie pour une courbure gaussienne ;
-    l'étape de repérage comprend la détermination d'une région de la surface tridimensionnelle dont la courbure moyenne des points est comprise entre une borne inférieure moyenne et une borne supérieure moyenne et dont la courbure gaussienne des points est comprise entre une borne inférieure gaussienne et une borne supérieure gaussienne ;
-    plusieurs régions de la surface tridimensionnelle, non connexes deux à deux, sont repérées lors de l'étape de repérage formant des régions candidates, le centre d'une des régions de plus grande taille parmi les régions candidates étant déterminé comme le bout du nez ;
-    le calcul d'au moins un angle parmi les trois angles de rotation comprend le repérage d'un pont du nez dans la surface tridimensionnelle, le pont du nez étant de préférence repéré comme le point de courbure maximale le long d'un profil à l'intersection entre le plan de symétrie partielle et le maillage tridimensionnel ;
-    le calcul d'au moins deux angles parmi les trois angles de rotation comprend la détermination d'un plan de symétrie partielle de la surface tridimensionnelle passant par le bout du nez ;
-    la région de plus grande taille est déterminée comme ne contenant pas le bout du nez si le plan de symétrie partielle obtenu en considérant le centre de ladite région comme le bout du nez donne, par symétrie, des images de sommets du visage trop éloignés des sommets du maillage, ou si le point de courbure minimale le long du profil, considéré comme une estimation raffinée du bout du nez, est trop lointain du centre de la région ou si la courbure dudit point de courbure minimale n'est pas comprise dans un intervalle prédéterminé, ou si la courbure du pont du nez le long d'un profil du visage n'est pas comprise dans un deuxième intervalle prédéterminé, ou si une distance entre le pont du nez et le bout du nez n'est pas comprise dans un troisième intervalle prédéterminé,

ladite détermination étant réalisée de préférence avant la comparaison par rapport au gabarit de visage de référence, les étapes de repérage et de calcul des trois angles de rotation étant alors réitérées en sortant la région de plus grande taille des régions candidates ;
-    le procédé comprend des étapes supplémentaires de calcul d'un flux optique entre des points d'une projection bidimensionnelle du maillage tridimensionnel et des points d'une projection bidimensionnelle d'un maillage image du maillage tridimensionnel selon un plan passant par le bout du nez précédemment calculé, et de correction de la pose de visage en fonction du flux optique calculé.

- le procédé comprend des étapes préliminaires d'acquisition, par un capteur tridimensionnel, d'une carte de profondeur d'une scène et de calcul du maillage tridimensionnel à partir de ladite carte de profondeur.

L'invention concerne aussi un procédé de génération d'une vue de face d'un individu à partir d'une carte de profondeur, comprenant les étapes du procédé selon le premier aspect défini ci-avant au cours desquelles la détection d'un visage réel est validée, et comprenant une étape additionnelle d'application, sur le maillage tridimensionnel, d'une rotation selon les trois angles de rotation préalablement déterminés, résultant en un maillage frontalisé.

L'invention concerne aussi un procédé de contrôle de l'identité d'un individu, comprenant la mise en oeuvre d'un procédé de génération de vue de face tel que défini ci-avant, et comprenant une étape supplémentaire de comparaison entre au moins une image du maillage frontalisé et au moins une image d'un maillage tridimensionnel de référence préalablement acquis sur l'individu de façon certifiée,

l'image du maillage frontalisé et l'image du maillage tridimensionnel de référence étant prises parmi l'un des quatre canaux suivants: carte de profondeur et/ou carte de la composante selon le troisième axe des normales à la surface tridimensionnelle et/ou carte de courbure moyenne et/ou carte de courbure gaussienne, l'individu étant considéré comme valablement identifié ou non en fonction du résultat de la comparaison.

Le procédé de contrôle peut présenter les caractéristiques additionnelles suivantes, prises seules ou en l'une quelconque des combinaisons techniquement possibles :

- le maillage frontalisé et le maillage tridimensionnel de référence sont comparés selon chacun des quatre canaux définis ci-avant ;
- la comparaison est réalisée par une unité de traitement comprenant un premier réseau de neurones convolutif dont des paramètres ont été appris par apprentissage automatique ;
- une image bidimensionnelle acquise est en outre comparée, lors d'une deuxième comparaison, à une image bidimensionnelle de référence préalablement acquise sur l'individu de façon certifiée, la deuxième comparaison étant réalisée par une unité de traitement comprenant un deuxième réseau de neurones convolutif de préférence distinct du premier réseau de neurones convolutif.

L'invention se rapporte, selon un deuxième aspect, à un système comprenant une unité d'acquisition comprenant un capteur tridimensionnel configuré pour acquérir une carte de profondeur d'un visage, ainsi qu'une unité de traitement configurée pour mettre en oeuvre un procédé de détection de visage et de détermination de pose tel que défini ci-avant de manière à déterminer une pose du visage à partir de la carte de profondeur.

De manière avantageuse et facultative, l'unité de traitement est configurée pour générer un maillage frontalisé, le système comprenant en outre une unité de gestion comportant une mémoire dans laquelle une pluralité d'images de maillages tridimensionnels de référence sont enregistrées,

l'unité de gestion étant dotée d'un réseau de neurones convolutif configuré pour réaliser une comparaison entre une image du maillage frontalisé et une image de maillage tridimensionnel de référence selon le procédé de contrôle tel que défini ci-avant.

L'invention concerne enfin, selon un troisième aspect et selon un quatrième aspect, respectivement :

un programme d'ordinateur comprenant des instructions de code permettant la mise en oeuvre d'un procédé de détection de visage et de détermination de pose, de génération de vue de face ou de contrôle d'identité tel que défini ci-avant, lorsque lesdites instructions de code sont exécutées par une unité de traitement,

et des moyens de stockage lisibles par ordinateur sur lesquels sont préenregistrées des instructions de code permettant la mise en oeuvre d'un procédé de détection de visage et de détermination de pose, de génération de vue de face ou de contrôle d'identité tel que défini ci-avant.

**PRESENTATION GENERALE DES FIGURES**

D'autres caractéristiques, buts et avantages de l'invention ressortiront de la description qui suit, qui est purement illustrative et non limitative, accompagnée des dessins annexés parmi lesquels :

La **Figure 1** représente schématiquement un système de détection de visage, de détermination de pose et de contrôle d'identité selon l'invention ;
La **Figure 2** représente les étapes d'un procédé de détection de visage et de détermination de pose selon un exemple de réalisation de l'invention ;
La **Figure 3** représente un premier maillage tridimensionnel dans lequel un unique visage réel est présent ;
Les **Figures 4a et 4b** correspondent respectivement à une carte de courbure gaussienne et à une carte de courbure moyenne obtenues toutes deux à partir d'un même maillage tridimensionnel comprenant un visage ;
La **Figure 5** représente un exemple des étapes de détermination du bout du nez et de détermination des angles de rotation ;

Les **Figures 6a, 6b et 6c** représentent respectivement une carte de courbure gaussienne, une carte de courbure moyenne et une représentation de régions candidates à contenir le bout du nez ;

La **Figure 7a** représente un deuxième maillage tridimensionnel positionné dans un repère tridimensionnel orthogonal, ce maillage comprenant un unique visage réel ;

La **Figure 7b** représente un troisième maillage tridimensionnel comprenant un visage réel ainsi qu'un buste d'un individu ;

La **Figure 7c** représente un quatrième maillage tridimensionnel comprenant un visage réel d'un individu ainsi qu'une scène de fond ;

La **Figure 8** représente un profil du visage de la Figure 7a selon un plan de symétrie P ;

La **Figure 9** représente le maillage tridimensionnel de la Figure 7a après une frontalisation ;

La **Figure 10** représente les étapes d'un procédé de contrôle de l'identité d'un individu selon un mode de réalisation de l'invention ;

La **Figure 11** donne, de gauche à droite, une carte de profondeur, une carte des Z-normales, une carte de courbure gaussienne et une carte de courbure moyenne obtenues à partir d'un même maillage tridimensionnel comprenant un visage.

## DESCRIPTION DETAILLEE DE MODES DE REALISATION

Dans toute la suite, la « pose » du visage correspond à son orientation sur une vue acquise, par rapport à une orientation centrée et de face. Cette pose est décrite par trois angles de rotation du visage dans l'espace et par la position d'un point du visage, tel que le bout du nez.

*Système d'acquisition et de traitement d'images*

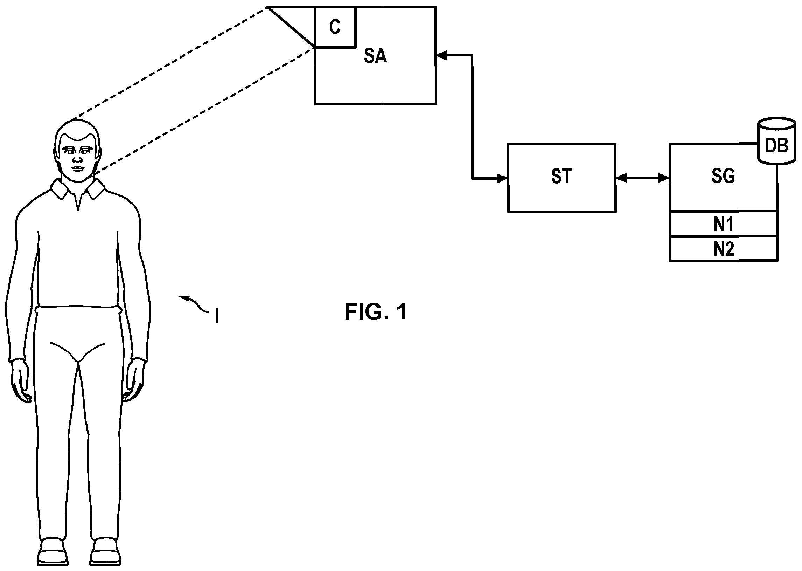

On a représenté sur la **Figure 1** un système d'acquisition et de traitement d'une image supposée illustrer le visage d'un individu I. Ce système est adapté pour réaliser la détection du visage de l'individu (i.e. vérifier que l'image acquise comporte bien un visage, et distinguer le cas échéant ce visage d'autres éléments présents sur l'image) et la détermination de la pose du visage sur l'image acquise. Le système est avantageusement également configuré pour mettre en oeuvre la génération d'une vue de face du visage à partir de cette image, et l'identification de l'individu I à partir de la vue de face.

Le système comprend une unité d'acquisition SA comprenant un capteur C. L'unité d'acquisition SA comprend par exemple un processeur et une mémoire pour enregistrer les vues fournies par le capteur C.

De manière importante, le capteur C est un capteur tridimensionnel pouvant acquérir une représentation tridimensionnelle de la face avant du visage de l'individu I. De préférence, il s'agit d'un capteur « actif » ne nécessitant pas de collaboration de la part de l'individu I et étant instantané.

On peut utiliser un capteur de type « métrique », associant à chaque point de la surface du visage une distance par rapport au capteur. A titre d'exemple, le capteur C peut être un capteur à « temps de vol » de calculer précisément le temps de trajet aller-retour d'un rayon lumineux. Il peut s'agir encore d'un capteur à « lumière structurée » détectant l'image d'une grille de lumière sur le visage.

Le capteur C fournit une carte de profondeur du visage de l'individu I, sur laquelle chaque pixel a une couleur qui dépend de la distance du point correspondant du visage par rapport au capteur. La carte de profondeur est métrique, c'est-à-dire que la valeur des pixels correspond à une distance absolue et non relative. Des capteurs de type passif ou monoculaire standard ne sont pas en mesure de fournir des cartes de profondeur métriques.

Pour plusieurs applications, il est pertinent de connaître la pose de l'individu I. Dans l'exemple de la Figure 1, on souhaite contrôler l'identité de l'individu I.

Le système comprend à ce titre une unité de traitement ST comprenant des moyens de traitement, par exemple un processeur, adaptés pour mettre en oeuvre un traitement visant à « frontaliser » la vue de visage acquise à l'aide du capteur C. L'unité ST comprend un processeur ou une pluralité de processeurs dans lesquels sont encodées des instructions de code pour exécuter automatiquement plusieurs traitements sur la base d'un maillage tridimensionnel M de visage issu des vues acquises. Ces traitements seront décrits ci-après. Le ou les processeurs sont notamment configurés pour identifier un bout de nez à partir d'une carte de courbure, rechercher un plan de symétrie du maillage tridimensionnel et effectuer une comparaison entre une zone de visage délimitée dans le maillage et un gabarit de référence pré-enregistré dans une mémoire de l'unité ST. L'unité ST comprend en outre une interface de communication avec l'unité d'acquisition SA pour recevoir les vues acquises.

Le système comprend en outre une unité de gestion SG pour réaliser un contrôle d'identité. L'unité SG comporte une base de données DB dans laquelle une pluralité d'images de maillages tridimensionnels de référence sont enregistrées (ou l'unité SG communique avec une telle base de données via un réseau de communication). L'unité SG comprend un processeur configuré pour mettre en oeuvre une comparaison d'une image frontalisée avec une image de la base de données DB, afin de déterminer si les visages correspondent à la même personne.

De préférence, l'unité de gestion SG comprend un processeur programmé avec un premier réseau de neurones convolutif N1 et, optionnellement, un deuxième réseau de neurones convolutif N2.

Dans un autre exemple, on peut déterminer la pose du visage pour permettre à l'individu I de corriger l'orientation de son visage, notamment dans des systèmes d'aide à la conduite. Pour cet exemple particulier, le système ne comprend pas nécessairement l'unité de gestion SG, et l'unité ST n'est pas nécessairement adaptée pour générer une vue frontalisée.

*Procédé de détermination de la pose et de génération d'une vue frontalisée*

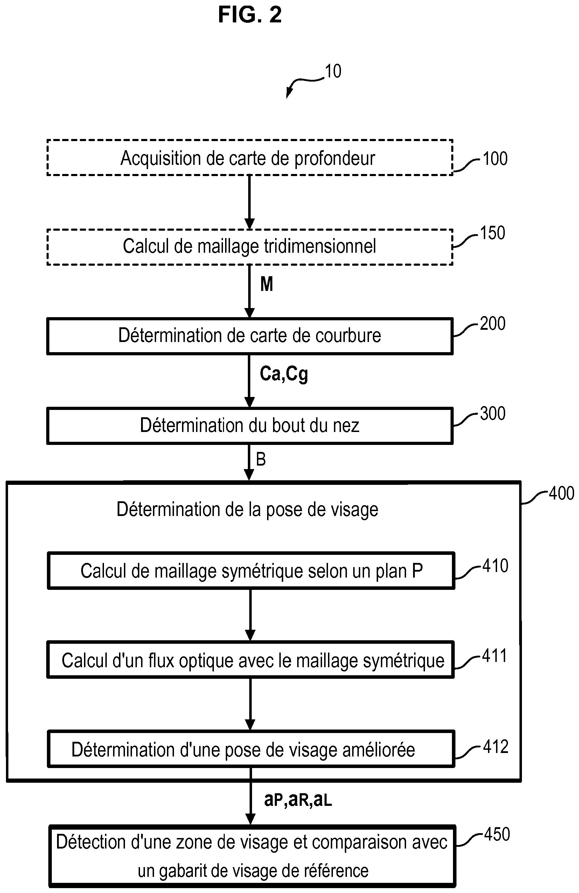

En référence à la **Figure 2** annexée, on décrit en premier lieu un procédé de détermination de pose d'un visage, mis en oeuvre par exemple par l'unité de traitement ST du système de la Figure 1.

A une étape 100, le capteur C acquiert une carte de profondeur du visage d'un individu I, sur instruction de l'unité de traitement ST.

A une étape 150, un maillage tridimensionnel M, représentatif de la surface du visage, est calculé à partir de la carte de profondeur.

Par « maillage tridimensionnel » on entend une représentation de la forme de la surface du visage, dans un repère tridimensionnel. Un tel maillage comprend une pluralité de sommets tridimensionnels, repérés par leurs coordonnées, et comprend en outre des éléments de surface qui relient lesdits sommets pour former une surface tridimensionnelle.

On ne détaillera pas ici cette étape, mais on en rappelle le principe général : les paramètres intrinsèques du capteur C, notamment les distances focales et le centre optique, sont connus, et on peut donc convertir chaque pixel de la carte de profondeur en un sommet tridimensionnel. Des éléments de surface, délimités par plusieurs sommets, sont ensuite paramétrés automatiquement.

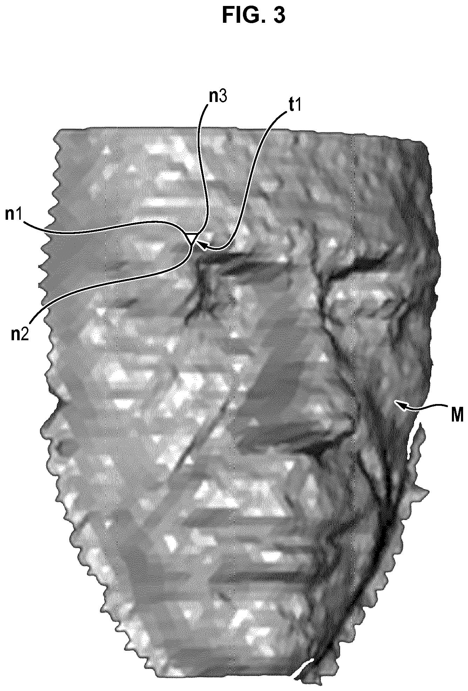

La **Figure 3** représente une vue (non de face) d'un maillage M issu du calcul de l'étape 150. L'affichage fourni par une interface graphique de l'unité de traitement ST peut correspondre à la représentation de cette figure. Le maillage M comprend de nombreux sommets (par exemple plusieurs milliers) parmi lesquels les sommets $n_1$, $n_2$ et $n_3$. Le maillage M comprend, comme éléments de surface, des triangles délimités par les sommets tridimensionnels du maillage, parmi lesquels le triangle $t_1$ délimité par $n_1$, $n_2$ et $n_3$.

Les étapes 100 et 150 sont optionnelles. En effet, l'unité de traitement ST peut recevoir une carte de profondeur, ou encore recevoir un maillage tridimensionnel déjà calculé.

De retour à la Figure 2, le procédé de détermination de la pose comprend un traitement visant à déterminer un sommet du maillage M correspondant au bout B du nez du visage. Le bout du nez est utilisé comme ancrage pour détecter un visage dans le maillage tridimensionnel et pour déterminer sa position. Ce point précis est avantageux car il présente des propriétés de courbure particulières.

A cet effet, l'étape 200 consiste à obtenir une ou plusieurs cartes de courbure à partir de la surface tridimensionnelle décrite par le maillage M. Une carte de courbure correspond à un type précis de courbure et à une projection bidimensionnelle de la surface du visage. On associe à chaque pixel la courbure calculée au point correspondant de la surface.

De manière avantageuse, la carte de courbure obtenue correspond à une courbure moyenne du maillage tridimensionnel ou à une courbure gaussienne. De préférence, on calcule deux cartes à l'étape 200 : une carte Cg de la courbure gaussienne et une carte Ca de la courbure moyenne à partir du maillage M, selon une même orientation qui correspond à la face avant du visage. Il est avantageux d'utiliser ces courbures car elles varient de manière spécifique au voisinage du bout du nez.

Pour des exemples d'algorithmes d'estimation de ces deux courbures pour une surface décrite par un maillage triangulaire, on pourra se référer au document suivant : A comparison of gaussian and mean curvatures estimation methods on triangular meshes, Surazhsky, T., Magid, E., Soldea, O., Elber, G., & Rivlin, E. In Robotics and Automation, 2003. Proceedings. ICRA'03. IEEE (Vol. 1, pp. 1021-1026), section 3. Il est particulièrement avantageux d'utiliser, pour la détermination des cartes de courbure moyenne et de courbure gaussienne, la méthode de Gauss-Bonnet décrite dans ladite section de ce document.

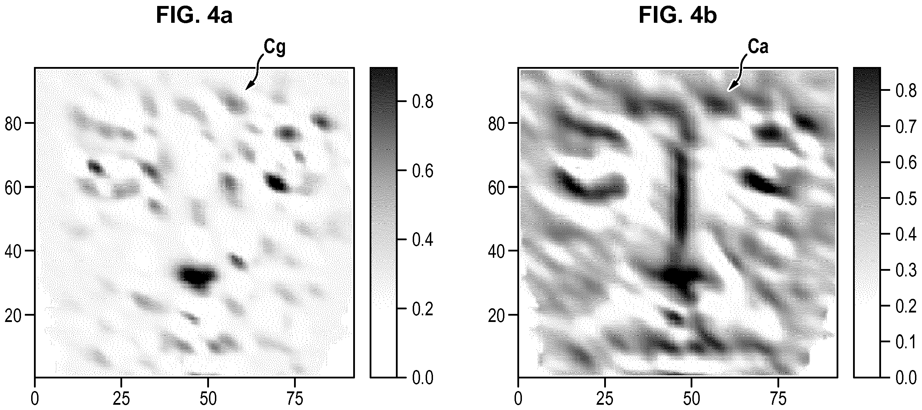

On a représenté en **Figure 4a** une carte de courbure gaussienne Cg et en **Figure 4b** une carte de courbure moyenne Ca ; la région autour du bout du nez correspond à la fois à une courbure gaussienne élevée et une courbure moyenne élevée.

Le procédé de la Figure 2 se poursuit par une détermination de bout du nez à partir du maillage M et d'au moins une carte de courbure à l'étape 300 et par une détermination de pose à l'étape 400.

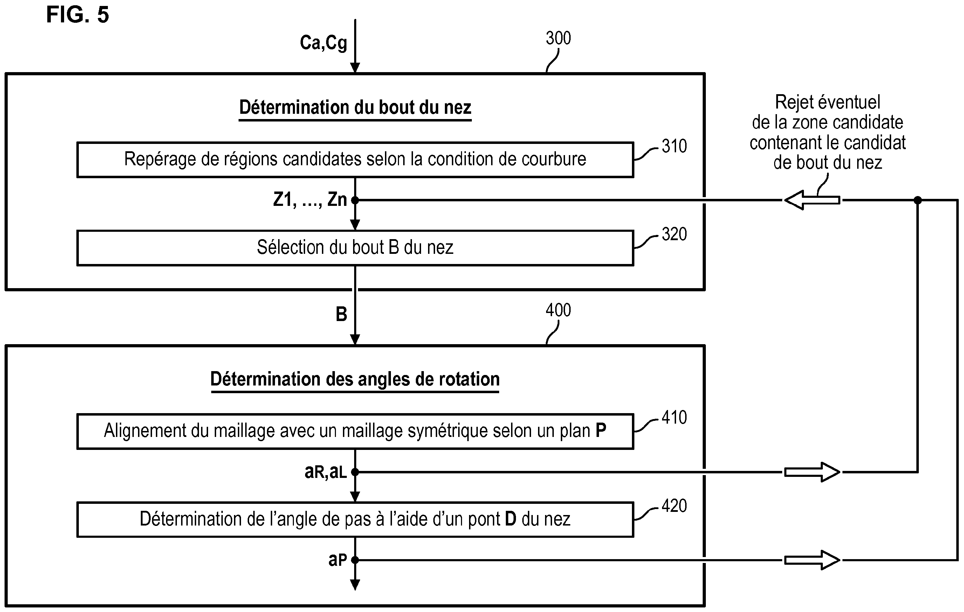

On a représenté en **Figure 5** un mode de réalisation particulier de l'étape 300 de détermination du bout du nez et de l'étape 400 de détermination de pose à partir dudit bout du nez.

A une sous-étape 310, on repère sur le maillage M des régions candidates à contenir le bout B du nez, à l'aide des cartes de courbure Ca et Cg.

On a constaté par analyse statistique que les points x du voisinage du bout du nez ont des courbures vérifiant les équations suivantes :

$$m^g < G(x) < M^g,$$

où G(x) est la fonction qui associe à chaque point x sa courbure gaussienne, $m^g$ est une borne inférieure de courbure gaussienne et $M^g$ est une borne supérieure de courbure gaussienne, et

$$m^a < A(x) < M^a$$

où A(x) est la fonction qui associe à chaque point x sa courbure moyenne, $m^a$ est une borne inférieure de courbure moyenne et $M^a$ est une borne supérieure de courbure moyenne.

Les bornes inférieure et supérieure de courbure moyenne et de courbure gaussienne sont prédéterminées. Elles sont choisies de manière à former des intervalles de courbure gaussienne et de courbure moyenne suffisamment étroits pour correspondre spécifiquement au bout du nez.

Si l'ensemble des sommets qui vérifient concomitamment les deux équations est connexe, alors le bout B du nez est désigné comme étant un sommet du maillage M situé au centre dudit ensemble - par exemple la moyenne des points de la composante connexe, c'est-à-dire le centre de masse dudit ensemble - et on passe à l'étape 400 de détermination de pose.

On note que la détection du bout B du nez selon cette méthode ne nécessite pas la détection préalable d'une quelconque zone de visage à l'intérieur du maillage tridimensionnel M.

Ainsi, la détection du bout B du nez peut être réalisée sur un maillage qui n'a pas fait l'objet d'un pré-traitement pour détecter un visage. En effet, le bout B du nez pourra être avantageusement utilisé pour délimiter une zone correspondant à un visage, comme vu ci-après, et réaliser la détection de visage.

Notamment, cette méthode de détection de bout du nez à l'étape 400 demeure robuste si le maillage tridimensionnel M ne comprend aucun visage, s'il comprend un visage environné d'autres éléments formant un « bruit » de détection, ou encore s'il comprend plusieurs visages côte-à-côte. Dans la mesure où plusieurs régions candidates à contenir le bout du nez peuvent être déterminées, il est aisé de considérer le prochain candidat à être le bout du nez, dans le cas où un premier candidat s'avère ne pas correspondre au bout du nez recherché.

De manière avantageuse, il est donc possible de mettre en oeuvre la détection de bout du nez dans des conditions non contraintes, et notamment sans pré-traitement de la carte de profondeur acquise, sans pour autant remettre en cause la fiabilité de la détection de visage.

L'ensemble des sommets du maillage M dont les courbures moyenne A(x) et gaussienne G(x) vérifient les deux équations ci-avant n'est pas nécessairement un ensemble connexe. Si cet ensemble n'est pas connexe, on détermine de préférence les composantes connexes dudit ensemble pour obtenir le bout B du nez à l'étape 300, l'expression « composante connexe » étant entendue dans son sens habituel en topologie.

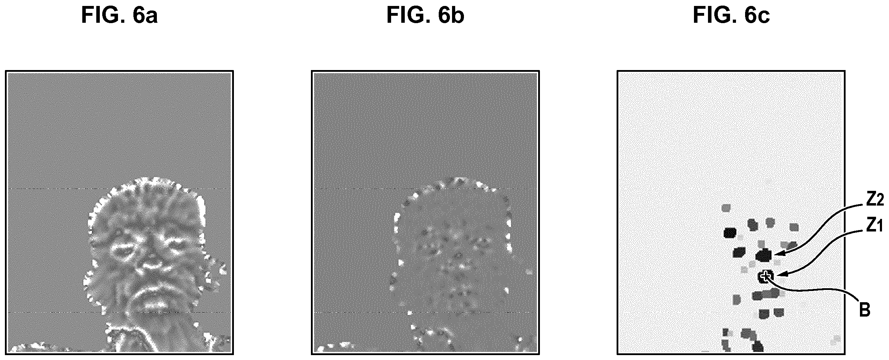

On obtient un ensemble fini de parties de la surface tridimensionnelle, appelées régions candidates $Z_1$, ..., $Z_n$ à contenir le bout du nez. On a représenté un exemple particulier sur les **Figures 6a, 6b et 6c,** qui illustrent respectivement la courbure moyenne, la courbure gaussienne et les composantes connexes vérifiant les équations ci-avant.

On constate sur la Figure 6c que parmi les régions candidates, représentées de couleur différente de celle de l'arrière-plan, la zone $Z_1$ a la plus grande surface et la zone $Z_2$ a la deuxième plus grande surface. On fait l'hypothèse que la région candidate qui est la plus susceptible de contenir un bout du nez d'un visage réel est celle de plus grande surface.

Ainsi, après le repérage des régions candidates, les régions repérées sont ordonnées par surface décroissante à une étape 320. On considère (éventuellement temporairement) que la première région candidate, ici $Z_1$, contient le bout du nez. On sélectionne donc le sommet qui est au centre de la région $Z_1$ comme bout B du nez.

A l'issue de l'étape 300, on dispose d'une estimation de la position du bout du nez, et donc d'une première partie de l'estimation de la pose. On notera qu'il n'est pas nécessaire d'avoir détecté une zone correspondant à un visage pour obtenir l'estimation du bout du nez.

Pour achever l'estimation de la pose, et de retour à la Figure 2, on détermine à une étape 400 les trois angles de rotation du visage.

L'espace étant muni d'un repère (X, Y, Z) orthogonal, on définit l'angle de pas (« pitch » en anglais) comme l'angle de rotation du visage de haut en bas autour de l'axe X, l'angle de roulis (« roll ») comme l'angle de rotation autour de l'axe Z et l'angle de lacet (« yaw ») comme l'angle de rotation de gauche à droite autour de l'axe Y. Ces trois angles permettent de caractériser l'orientation du visage.

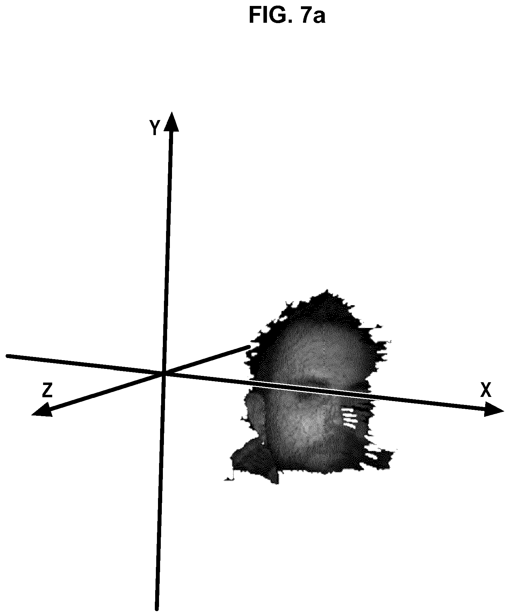

Sur la **Figure 7a,** on a représenté un maillage tridimensionnel distinct de celui de la Figure 3. On a également repéré les axes (X, Y, Z). Ce maillage tridimensionnel comprend un unique visage et ne comprend pas d'élément supplémentaire.

A partir de ce maillage et dans un premier temps, on translate le maillage M de sorte à placer l'origine des trois axes (X, Y, Z) en superposition avec le bout B du nez obtenu précédemment. L'origine n'a pas été représentée au bout du nez sur la Figure 7a.

A une sous-étape 410, on détermine l'angle $a_L$ de lacet du visage et l'angle $a_R$ de roulis du visage. Pour ce faire, on détermine un plan P de symétrie partielle (non représenté sur la Figure 7a) tel que les points du maillage tridimensionnel M soient les plus proches possibles des points d'un maillage symétrique du maillage M par rapport au plan P. Le maillage symétrique est obtenu en multipliant par -1 les coordonnées selon X de tous les sommets du maillage M. Le maillage symétrique est donc l'image du maillage M selon le plan P.

En d'autres termes, le plan de symétrie recherché est tel que le maillage M et le maillage symétrique obtenu à l'aide de ce plan soient alignés au maximum.

On obtient un repère orthogonal (X, Y, Z) en utilisant comme origine du repère le bout du nez B, et comme plan parallèle aux deux axes (BY) et (BZ) du repère le plan P précédemment obtenu.

On détermine alors à partir de la position du plan P les valeurs de l'angle de lacet $a_L$ et de l'angle de roulis $a_R$.

L'identification de ce plan de symétrie P présente l'avantage de nécessiter très peu de temps et de ressources de calcul supplémentaires.

Un autre avantage est qu'une seule symétrisation du maillage est à effectuer pour identifier ce plan, à l'inverse de certains procédés de détection de pose de l'état de la technique au cours desquels deux plans de symétrie différents doivent être testés pour discriminer l'axe Y et l'axe Z lors de la détermination de pose.

De manière optionnelle et avantageuse, la détermination du plan de symétrie peut être affinée à des sous-étapes 411 et 412.

A une sous-étape 411, on réalise une projection bidimensionnelle de la carte de profondeur du maillage tridimensionnel M. On réalise également une projection bidimensionnelle de la carte de profondeur d'un maillage M'image du maillage tridimensionnel M selon le plan passant par le bout du nez B et contenant les deux directions (BY) et (BZ) définies par le repère (X, Y, Z) orthogonal. Les deux projections bidimensionnelles sont réalisées selon une même direction de projection. On calcule ensuite un flux optique entre les deux projections : si le plan de symétrie dont est issu le maillage symétrique est bon, le flux optique calculé est faible. A titre d'exemple, un flux optique moyen peut être calculé entre le maillage tridimensionnel M entier et son maillage image.

A une sous-étape 412, le calcul de flux optique est utilisé, le cas échéant, pour améliorer la détermination de la pose issue du maillage tridimensionnel M. Par exemple, à partir du même bout du nez B, on améliore l'alignement entre le maillage tridimensionnel M et le repère (X, Y, Z) de sorte à minimiser le flux optique entre le maillage M et un nouveau maillage image selon le plan contenant les deux directions (BY) et (BZ). On obtient de nouvelles valeurs de l'angle de lacet $a_L$ et de l'angle de roulis $a_R$ permettant d'affiner la détermination de la pose.

Le calcul de flux optique peut être réitéré et la détermination de pose peut être davantage améliorée, par exemple jusqu'à convergence du flux optique (somme des flux optiques en-deçà d'une valeur seuil prédéterminée).

L'utilisation des cartes de profondeur pour le calcul du flux optique est avantageuse, car elle minimise l'impact des valeurs aberrantes calculées aux bords du visage réel de l'individu, le flux optique étant préférentiellement calculé à partir de la région centrale du visage. Le calcul de flux optique est rapide en temps de calcul ; en outre, la performance dudit calcul ne dépend pas de la résolution du maillage tridimensionnel.

En alternative, la recherche du plan P peut être faite selon un algorithme ICP, ou « Iterative Closest Point », en essayant plusieurs plans de symétrie et en trouvant le plan optimal. On pourra se référer au document suivant : A Method for Registration of 3D Shapes, P.J. Besl, N.D. McKay, IEEE Transactions on Pattern Analysis and Machine Intelligence, vol. 14(2), 1992, pp. 239-256, et notamment à la partie IV pages 243 à 246 dudit document. On peut chercher à minimiser la somme des distances cumulées entre les sommets et leurs images symétriques. De manière avantageuse, on dispose d'un seuil de distance prédéterminé pour définir un critère de convergence de l'algorithme ICP. Si la distance cumulée est sous le seuil, on détermine à partir de la position du plan P les valeurs de l'angle de lacet $a_L$ et de l'angle de roulis $a_R$.

Si la symétrisation du maillage à partir du bout B du nez considéré est peu satisfaisante (par exemple si le flux optique défini ci-avant ne converge pas, ou bien si l'algorithme ICP ne permet pas d'atteindre une distance cumulée inférieure au seuil), on considère que le bout B du nez considéré pour cette itération de l'algorithme ICP est un faux candidat de bout du nez. La symétrisation permet ainsi, optionnellement et avantageusement, de vérifier la pertinence du bout B du nez.

Si l'étape 310 avait permis d'identifier plusieurs régions candidates à contenir le bout du nez, et si le bout B du nez est défini comme un faux candidat de bout du nez, on réitère alors l'étape 320 en écartant la région candidate $Z_1$ et en sélectionnant le bout B du nez au centre de la région candidate suivante $Z_2$, et ainsi de suite le cas échéant.

De retour à la Figure 2, le procédé 10 comprend ensuite la délimitation d'une zone de visage constituée de sommets tridimensionnels du maillage M, sélectionnés en fonction de leur position par rapport au bout B du nez. La zone de visage est considérée comme contenant un visage réel d'un individu.

A titre d'exemple, un ovale peut être dessiné autour du bout B du nez, sur la surface tridimensionnelle issue du maillage M. Les positions des points extrêmes de l'ovale sont repérées par rapport au bout B du nez. A titre d'exemple non limitatif, l'ovale s'étend :

- jusqu'à une distance comprise entre 3 et 10 centimètres sur les côtés du bout B du nez, typiquement 5 centimètres (en correspondance avec les côtés gauche et droit du visage),
- jusqu'à une distance comprise entre 1 et 5 centimètres vers le bas depuis le bout B du nez, typiquement 3 centimètres (en correspondance avec la zone basse du visage),
- jusqu'à une distance comprise entre 5 et 15 centimètres vers le haut du bout B du nez, typiquement 8 centimètres (en correspondance avec la zone haute du visage).

Les directions vers le haut, vers le bas et sur les côtés s'expriment conformément au repère orthogonal (X, Y, Z) obtenu précédemment.

La zone susceptible de contenir un visage est ainsi délimitée à l'aide du bout du nez. Ce dernier est utilisé comme un point de repère.

Une fois la zone de visage délimitée, le procédé se poursuit par une étape 450 de validation de la zone de visage, par comparaison entre la zone de visage et un gabarit de visage de référence.

On entend par « gabarit de visage de référence » un visage considéré comme moyen, pour lequel on dispose d'un maillage tridimensionnel pré-enregistré. Au cours de l'étape 450 de validation, il est possible d'appliquer une rotation au maillage du gabarit de référence, afin de le ramener à une pose similaire à la pose estimée pour le maillage tridimensionnel M. De manière optionnelle, on utilise une pluralité de maillages tridimensionnels comme gabarit de référence. On peut effectuer une projection bidimensionnelle pour comparer la zone de visage et le gabarit.

Le résultat de la comparaison permet de valider la détection d'un visage réel dans le maillage tridimensionnel. Si la comparaison est positive, on estime qu'il existe un visage réel dans le maillage, ce visage réel correspondant à la zone de visage précédemment délimitée.

En revanche, si la comparaison est négative, on réitère avantageusement l'ensemble des étapes 320 à 450 en écartant le bout du nez qui avait été utilisé, et en passant au bout du nez suivant parmi les candidats de bout du nez.

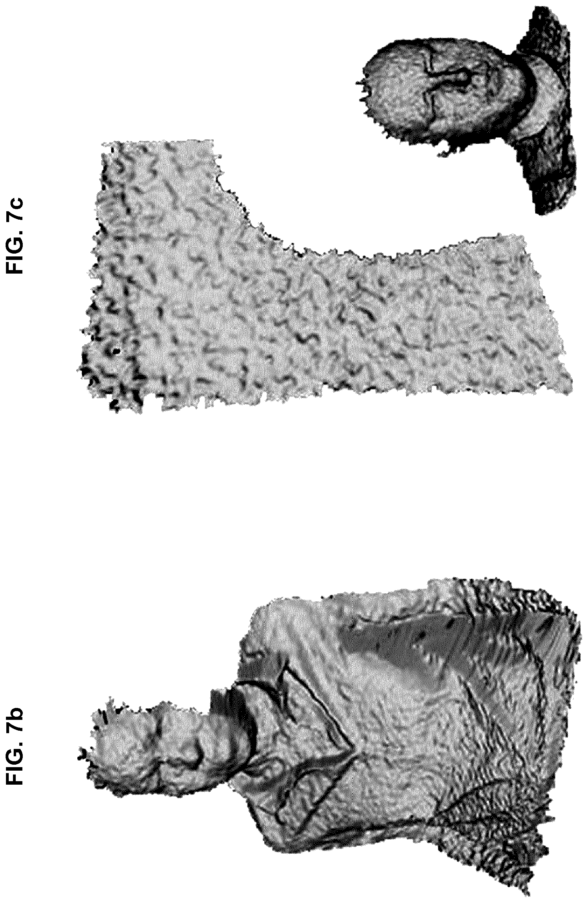

A titre illustratif, on a représenté deux autres maillages tridimensionnels sur les Figures 7b et 7c, acquis dans des conditions moins favorables que le maillage visible sur la Figure 7a. Ces deux maillages sont issus d'une acquisition par un capteur tridimensionnel.

La **Figure 7b** illustre un maillage qui comprend un visage d'un individu, mais aussi un buste de l'individu.

Les procédés connus de l'état de la technique pour la détermination de pose d'un visage d'une image tridimensionnelle, tels que le procédé décrit dans le document US 7 436 988 B2, prennent généralement comme point origine initial un centroïde proche du centre de l'image acquise, pour la recherche d'un plan de symétrie. Or, le centre de l'image tridimensionnelle visible sur cette figure est très éloigné du bout du nez réel de l'individu photographié. Un pré-traitement s'avèrerait donc nécessaire à partir de l'acquisition de la Figure 7b pour isoler le visage avant de déterminer la pose, selon la méthode décrite dans ce document.

A l'inverse, le procédé 10 est utilisable à partir de cette acquisition, sans pré-traitement. En cas de détection d'une zone de visage éloignée du visage réel de l'individu, la comparaison avec le gabarit de référence décrite précédemment (en relation à l'étape 450) ne permet pas de valider la présence d'un visage.

Ainsi, on passe automatiquement à un autre candidat de bout du nez déterminé à partir des cartes de courbure, jusqu'à détecter une zone de visage validée lors de la comparaison avec le gabarit de référence.

La **Figure 7c** illustre un maillage dans lequel un élément de fond (ici un pan de mur) est présent en complément d'un visage. De même, le centre de l'image tridimensionnelle n'est pas voisin du bout du nez. Pour que le procédé de détection de pose du document US 7 436 988 B2 fonctionne, un pré-traitement serait là encore nécessaire afin d'isoler le visage. Un tel pré-traitement n'est en revanche pas nécessaire pour appliquer le procédé 10, qui présente ainsi l'avantage de fonctionner même pour un visage environné de nombreux autres éléments, voire environné par des visages d'autres individus.

La donnée du plan de symétrie P (éventuellement amélioré par l'une des méthodes décrites ci-avant) permet de déduire l'angle $a_L$ de lacet du visage et l'angle $a_R$ de roulis du visage.

En référence à la Figure 5, dans un mode de réalisation particulier, la détermination de la pose comprend la détermination additionnelle d'un angle $a_P$ de pas.

A ce titre, la sous-étape 420 consiste à repérer, sur le maillage M, une arête du nez. L'angle de pas $a_p$ correspond à la rotation du visage autour de sa ligne de mire ; ainsi, la position de l'arête A du nez permet de déterminer l'angle de pas.

L'arête A du nez est un segment dans l'espace reliant le bout B du nez au pont D du nez. Le pont du nez est situé à la base du nez entre les deux sourcils. Pour repérer de manière automatique le pont D du nez sur le maillage, on considère le profil PR du visage compris dans le plan P de symétrie partielle précédemment déterminé à l'étape 410 (ou dans le plan P' amélioré obtenu à partir de ce plan P). Par profil du visage, on entend la courbe située à l'intersection entre la surface définie par le maillage M et le plan P.

Le profil PR du visage est donc une courbe comprise dans le plan P. Sur cette courbe, le pont D du nez correspond au point de courbure bidimensionnelle maximale, tandis que le bout B du nez (dont on dispose déjà) correspond au point de courbure minimale.

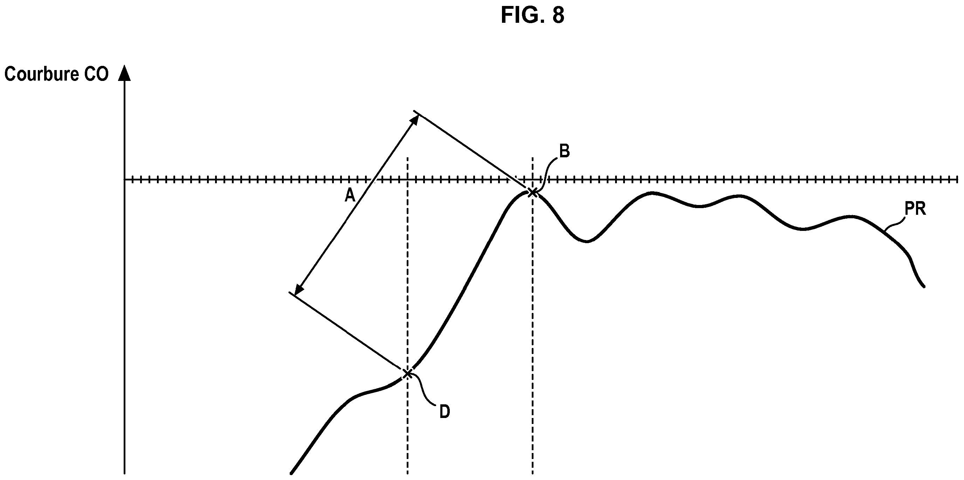

On a représenté sur la **Figure 8** un exemple de profil PR obtenu à l'étape 420, et on a repéré sur ce profil le bout B du nez et le pont D du nez. La courbure est ici orientée dans le sens indiqué sur l'axe CO.

De retour sur le maillage tridimensionnel M, la connaissance du pont D du nez permet de repérer l'angle $a_P$ de pas, par exemple en identifiant une rotation selon l'axe X qui fasse apparaître le visage comme droit.

De même qu'à l'étape 410 de détermination du lacet et du roulis, la détermination du profil et du pont du nez peut révéler que le candidat choisi pour le bout B du nez à l'étape 320 n'était pas un candidat adéquat.

On peut par exemple prévoir de changer de région candidate et de réitérer les étapes 320 à 420 dans les cas suivants : si la courbure du bout du nez le long d'un profil du visage n'est pas comprise dans un intervalle prédéterminé, si la courbure du pont du nez le long d'un profil du visage n'est pas comprise dans un intervalle prédéterminé, ou si une distance entre le pont du nez et le bout du nez (autrement dit la longueur de l'arête du nez) n'est pas comprise dans un intervalle prédéterminé.

On peut aussi prévoir de changer de région candidate si le point de courbure minimale le long du profil du visage, considéré comme une estimation raffinée du bout du nez B, est trop lointain du candidat choisi pour le bout du nez B.

Le procédé de détermination de pose présente donc l'avantage d'inclure une vérification automatique que les résultats intermédiaires (notamment l'estimation du bout du nez) sont satisfaisants, et le cas échéant, un passage à un autre candidat de bout du nez si ces résultats intermédiaires ne sont pas satisfaisants.

On notera que, tout comme le calcul du plan de symétrie pour déterminer l'angle de lacet et l'angle de roulis, la détermination de l'arête du nez ne nécessite pas d'avoir délimité et validé une zone de visage à l'intérieur du maillage tridimensionnel. La validation de zone de visage peut être mise en oeuvre ultérieurement (à l'étape 450).

A l'issue du procédé 10, dans le cas où une zone de visage a été délimitée et validée, la détermination de pose est terminée. On dispose des coordonnées du bout B du nez, et des angles de roulis, de pas et de lacet.

La connaissance de ces données de pose donne accès à une transformation du maillage M qui permet d'obtenir, à partir de chaque sommet du maillage initial non frontalisé, un sommet correspondant d'un maillage frontalisé centré et de face. Cette transformation correspond à l'équation suivante :

$$X_f = R*X + T,$$

où $X_f$ est le sommet du maillage frontalisé obtenu à partir du sommet X du maillage tridimensionnel M, T est le vecteur de translation de taille 3x1 qui ramène le bout B du nez à l'origine des axes, et R est la matrice de rotation de taille 3x3 d'angle $a_P$ selon X, d'angle $a_R$ selon Z et d'angle $a_L$ selon Y.

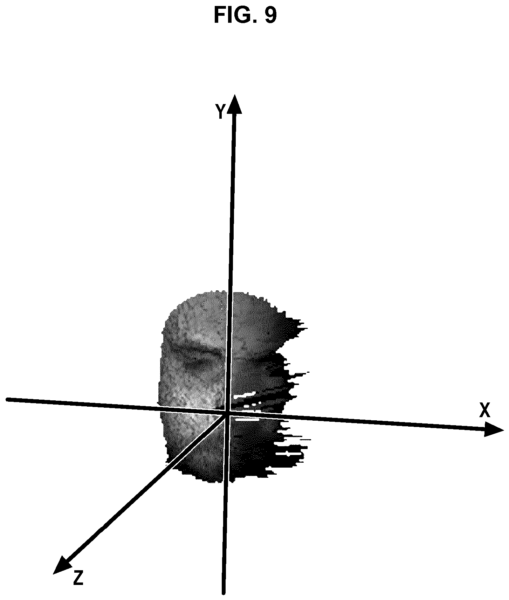

On a représenté en **Figure 9** un maillage frontalisé obtenu de cette manière, à partir des sommets tridimensionnels du maillage non frontalisé de la Figure 7a.

*Procédé de contrôle d'identité*

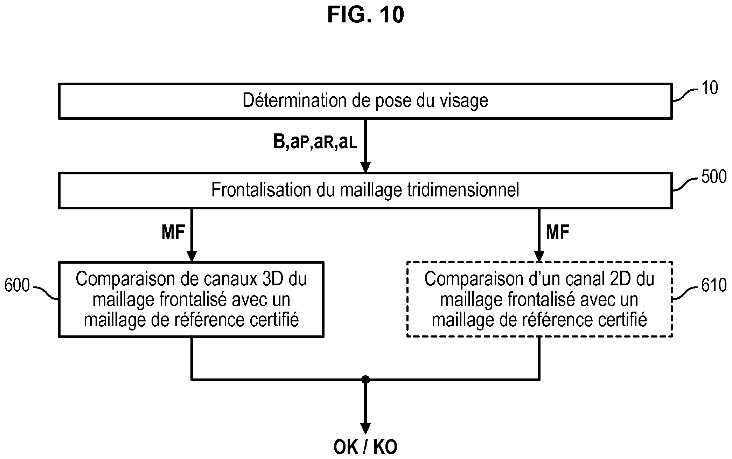

On décrira dans la suite un procédé de contrôle de l'identité d'un individu en relation à la **Figure 10**. Le contrôle d'identité est par exemple mis en oeuvre par le système de la Figure 1 et notamment par l'unité d'acquisition SA, l'unité de traitement ST et l'unité de gestion SG.

On rappelle que l'unité de gestion SG a accès (en mémoire, ou auprès d'une base de données distante via un réseau de communication sécurisé) à une pluralité d'images de maillages tridimensionnels de référence d'individus.

Par « maillages de référence » on entend des maillages de visage qui ont été préalablement acquis sur des individus de manière certifiée. Chacun de ces maillages comprend un unique visage. Chaque maillage de référence correspond de manière fiable à un individu. Au cours du contrôle d'identité, on compare une ou plusieurs images issues d'un maillage frontalisé, acquis avant le contrôle, à une ou plusieurs images issues du maillage de référence, pour déterminer si le maillage frontalisé a été acquis sur le même individu que l'un des maillages de référence.

Le maillage de référence est centré sur le bout du nez du visage de l'individu, et le visage est vu de face. Eventuellement, le même procédé de frontalisation que celui décrit précédemment a été préalablement appliqué aux maillages de référence pour s'assurer de disposer de vues frontalisées. Les maillages de référence sont acquis de façon certifiée, ce qui permet d'assurer que ces conditions sont remplies.

Le procédé de la Figure 10 s'applique aussi bien pour identifier un individu (en cherchant un maillage de référence qui lui correspond) que pour authentifier l'individu (en le comparant au maillage de référence pour son identité prétendue). On prendra dans la suite le cas de l'authentification, avec une comparaison à un seul maillage de référence.

A l'issue d'un procédé 10 de détection de visage et de détermination de pose, suivi d'une frontalisation 500 du maillage tridimensionnel acquis sur l'individu à contrôler, résultant en un maillage frontalisé MF, le procédé de contrôle comprend une étape 600 de comparaison d'un ou plusieurs canaux du maillage frontalisé MF avec le ou les canaux correspondants du maillage de référence.

Par « canal » du maillage, on entend une image bidimensionnelle issue d'une décomposition du maillage selon une transformation spécifique. On utilise de manière préférée un ou plusieurs canaux quelconques parmi les canaux suivants :

-   carte de profondeur ;
-   et/ou carte de la composante selon le troisième axe (Z ci-avant) des normales à la surface tridimensionnelle dans les maillages ;
-   et/ou carte de courbure moyenne le long des maillages ;
-   et/ou carte de courbure gaussienne le long des maillages.

On comprendra qu'il est possible d'isoler à ce stade la zone de visage délimitée au cours du procédé 10 de détection de visage et de détermination de pose, et de comparer uniquement cette zone du maillage frontalisé et le maillage de référence, selon un ou plusieurs canaux.

La comparaison 600 comprend la génération des images correspondant au maillage frontalisé MF selon les canaux choisis, puis le calcul d'un score de similarité entre le maillage frontalisé MF et le maillage de référence, qui est fonction de la similarité des canaux choisis.

De préférence, pour augmenter la fiabilité du contrôle, le maillage frontalisé MF et le maillage de référence sont comparés selon chacun des quatre canaux, ce qui correspond à quatre comparaisons d'images bidimensionnelles.

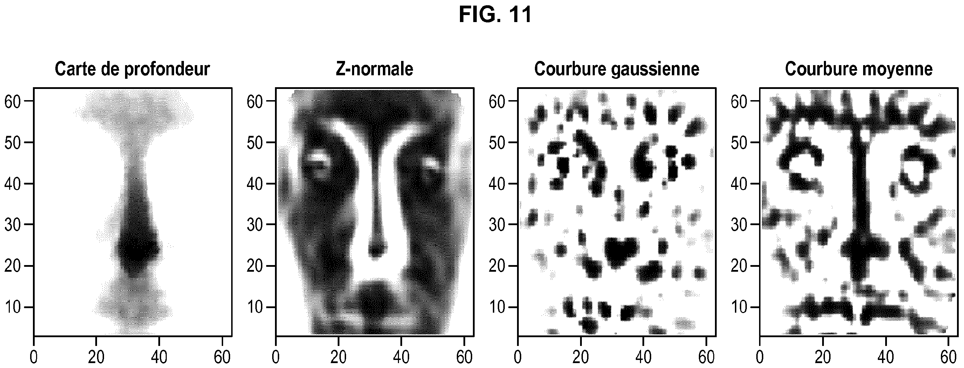

On a représenté en **Figure 11** des images obtenues selon les quatre dits canaux à partir d'un même maillage frontalisé de visage.

De manière très avantageuse, la comparaison 600 est réalisée en utilisant un réseau de neurones convolutif, par exemple le réseau N1 de la Figure 1. Le réseau de neurones a alors été préalablement entraîné, par apprentissage profond ou « deep learning », à effectuer une comparaison de deux maillages frontalisés de visage.

Au cours de l'apprentissage, le réseau de neurones convolutif a reçu préférentiellement comme données d'entrée des images selon les quatre dits canaux de visages à identifier. De préférence, le réseau de neurones comprend un nombre relativement limité de couches, pour accélérer le calcul dans un processeur intégré à un smartphone. Dans ce cas, la phase préalable d'apprentissage devra avoir été réalisée avec une quantité très importante de données d'entrée, par exemple avec des cartes de profondeur correspondant à plusieurs centaines d'acquisitions par personne, sur un panel de plusieurs milliers personnes.

En alternative, la comparaison de l'étape 600 peut être réalisée par un processeur programmé avec un classifieur linéaire, par exemple un classifieur naïf bayésien.

Toutefois, dans le cadre d'un contrôle d'identité embarqué dans un dispositif de type « smartphone », un capteur temps de vol sera préférentiellement utilisé dans un souci de miniaturisation, donnant des cartes de profondeur de plus petite taille et potentiellement plus bruitées pour lesquels le classifieur naïf bayésien est moins efficace.

Avec de telles contraintes, l'usage du réseau de neurones convolutif est avantageux car il est fiable malgré un éventuel bruit de mesure.

De retour à la Figure 10 et de façon optionnelle, une image bidimensionnelle du visage de la personne soumise au contrôle d'identité peut en outre être comparée, lors d'une deuxième comparaison 610, à une image bidimensionnelle de référence préalablement acquise sur l'individu de façon certifiée. L'image bidimensionnelle de référence peut être une image RGB ou en proche infra-rouge.

L'image bidimensionnelle et la carte de profondeur donnant le maillage frontalisé peuvent être fournies par le même capteur. De nombreux capteurs à temps de vol ou à lumière structurée sont en effet configurés pour acquérir des images bidimensionnelles en niveau de gris.

Un deuxième réseau de neurones convolutif N2, de préférence distinct du premier réseau N1, peut être prévu pour le contrôle d'identité et fournir un deuxième score de similarité distinct. La comparaison 610 supplémentaire permet de fiabiliser le contrôle car il a été observé que les faux positifs détectés par le réseau N1 obtiennent rarement un score élevé de la part du réseau N2, et inversement. L'association des données bidimensionnelles et tridimensionnelles améliore les performances de l'identification d'un individu, par rapport à des données tridimensionnelles prises seules ou à des données bidimensionnelles prises seules.

**Revendications**

1. Procédé de détection de visage et de détermination de pose de visage, à partir d'un maillage tridimensionnel comprenant une pluralité de sommets tridimensionnels et comprenant en outre des éléments de surface entre lesdits sommets formant une surface tridimensionnelle,
   le procédé comprenant les étapes suivantes exécutées par une unité de traitement :

   - détermination (200) d'une carte de courbure de la surface tridimensionnelle, des points de la carte de courbure correspondant aux points de la surface tridimensionnelle,
   - repérage (300), dans la carte de courbure, d'un bout (B) du nez au niveau duquel la surface tridimensionnelle présente une courbure prédéterminée,
   - à partir du maillage tridimensionnel centré sur le bout (B) du nez, détermination (400) d'une pose de visage, la pose étant définie par des coordonnées du bout (B) du nez, par un premier angle de rotation du visage autour d'un premier axe (X), par un deuxième angle de rotation du visage autour d'un deuxième axe (Y), et par un troisième angle de rotation du visage autour d'un troisième axe (Z),
   - délimitation d'une zone de visage constituée de sommets tridimensionnels du maillage sélectionnés en fonction de leur position par rapport au bout (B) du nez, et comparaison (450) entre la zone de visage délimitée et un gabarit de visage de référence comprenant un maillage tridimensionnel pré-enregistré de visage moyen, un résultat de la comparaison permettant de valider une détection d'un visage réel dans le maillage tridimensionnel et de valider la pertinence du bout (B) du nez.

2. Procédé selon la revendication 1, dans lequel, lors de l'étape de détermination (200) de carte de courbure, une première carte de courbure est établie pour une courbure moyenne et une deuxième carte de courbure est établie pour une courbure gaussienne.

**3.** Procédé selon la revendication 2, dans lequel l'étape de repérage (300) comprend la détermination d'une région de la surface tridimensionnelle dont la courbure moyenne ($A_x$) des points est comprise entre une borne inférieure moyenne ($m^a$) et une borne supérieure moyenne ($M^a$), et dont la courbure gaussienne ($G_x$) des points est comprise entre une borne inférieure gaussienne ($m^g$) et une borne supérieure gaussienne ($M^g$).

**4.** Procédé selon la revendication 3, dans lequel plusieurs régions de la surface tridimensionnelle, non connexes deux à deux, sont repérées lors de l'étape de repérage (300) et forment des régions candidates,
le centre de l'une des régions de plus grande taille parmi lesdites régions candidates étant déterminé comme le bout du nez.

**5.** Procédé selon l'une des revendications 1 à 4, dans lequel l'étape de repérage (300) de bout du nez est mise en oeuvre sans détection préalable d'une zone de visage dans le maillage tridimensionnel ni dans la carte de courbure.

**6.** Procédé selon l'une des revendications 1 à 5, dans lequel le calcul d'au moins deux angles parmi les trois angles de rotation comprend la détermination (410) d'un plan (P) de symétrie partielle de la surface tridimensionnelle passant par le bout (B) du nez.

**7.** Procédé selon la revendication 6, dans lequel le calcul d'au moins un angle parmi les trois angles de rotation comprend le repérage (420) d'un pont (D) du nez dans la surface tridimensionnelle, le pont du nez (D) étant de préférence repéré comme le point de courbure maximale le long d'un profil (PR) à l'intersection entre le plan (P) de symétrie partielle et le maillage tridimensionnel.

**8.** Procédé de détermination de pose selon les revendications 4 et 7 en combinaison, comprenant une détermination que la région de plus grande taille ne contient pas le bout du nez dans au moins l'un des cas suivants :

- après le calcul d'un maillage symétrique qui est l'image du maillage tridimensionnel selon le plan (P) de symétrie partielle, si une distance cumulée entre les points du maillage tridimensionnel et les points correspondants du maillage symétrique dépasse un seuil ;
- si le point de courbure minimale le long du profil, considéré comme une estimation raffinée du bout du nez, est trop lointain du centre de la région de plus grande taille ou si la courbure dudit point de courbure minimale n'est pas comprise dans un intervalle prédéterminé ;
- si la courbure du pont du nez le long d'un profil du visage n'est pas comprise dans un deuxième intervalle prédéterminé ;
- si une distance entre le pont du nez et le bout du nez n'est pas comprise dans un troisième intervalle prédéterminé,

ladite détermination étant réalisée de préférence avant la comparaison (450) par rapport au gabarit de visage de référence,
les étapes de repérage (300) et de calcul (400) des trois angles de rotation étant alors réitérées en sortant la région de plus grande taille des régions candidates.

**9.** Procédé selon l'une des revendications 6 à 8, comprenant des étapes supplémentaires de calcul (411) d'un flux optique entre des points d'une projection bidimensionnelle du maillage tridimensionnel et des points d'une projection bidimensionnelle d'un maillage image du maillage tridimensionnel selon un plan passant par le bout du nez (B) précédemment calculé, et de correction (412) de la pose de visage en fonction du flux optique calculé.

**10.** Procédé selon l'une des revendications 1 à 9, comprenant des étapes préliminaires d'acquisition (100), par un capteur tridimensionnel, d'une carte de profondeur d'une scène et de calcul (150) du maillage tridimensionnel à partir de ladite carte de profondeur.

**11.** Procédé de génération d'une vue de face d'un individu, à partir d'une carte de profondeur, comprenant la mise en oeuvre d'un procédé selon la revendication 10 au cours duquel la détection d'un visage réel est validée,
et comprenant une étape additionnelle d'application (500), sur le maillage tridimensionnel, d'une rotation selon les trois angles de rotation préalablement déterminés, résultant en un maillage frontalisé.

**12.** Procédé de contrôle de l'identité d'un individu, comprenant la mise en oeuvre d'un procédé de génération d'une vue de face de l'individu selon la revendication 11,

et comprenant une étape supplémentaire de comparaison (600) entre au moins une image du maillage frontalisé et au moins une image d'un maillage tridimensionnel de référence préalablement acquis sur l'individu de façon certifiée,
l'image du maillage frontalisé et l'image du maillage tridimensionnel de référence étant prises parmi l'un des quatre canaux suivants :

- carte de profondeur associée auxdits maillages ;
- et/ou carte d'une composante selon le troisième axe (Z) des normales à la surface tridimensionnelle dans lesdits maillages ;
- et/ou carte de courbure moyenne le long desdits maillages ;
- et/ou carte de courbure gaussienne le long desdits maillages, l'individu étant considéré comme valablement identifié ou non en fonction du résultat de la comparaison.

13. Procédé de contrôle d'identité selon la revendication 12, dans lequel le maillage frontalisé et le maillage tridimensionnel de référence sont comparés selon chacun des quatre canaux.

14. Procédé de contrôle d'identité selon l'une des revendications 12 ou 13, dans lequel la comparaison (600) est réalisée par une unité de traitement comprenant un premier réseau de neurones convolutif (N1) dont des paramètres ont été appris par apprentissage automatique.

15. Système de détermination de pose d'un visage, comprenant :

- une unité d'acquisition (SA) comprenant un capteur tridimensionnel (C) configuré pour acquérir une carte de profondeur,
- une unité de traitement (ST) configurée pour mettre en oeuvre un procédé selon l'une des revendications 1 à 14 de manière à détecter un visage et déterminer une pose du visage à partir de la carte de profondeur.

16. Produit programme d'ordinateur comprenant des instructions de code permettant la mise en oeuvre d'un procédé selon l'une des revendications 1 à 14, lorsque lesdites instructions de code sont exécutées par une unité de traitement.

17. Moyens de stockage lisibles par ordinateur sur lesquels sont préenregistrées des instructions de code permettant la mise en oeuvre d'un procédé selon l'une des revendications 1 à 14.

**Patentansprüche**

1. Verfahren zur Gesichtsdetektion und Gesichtshaltungsbestimmung anhand eines dreidimensionalen Netzes, das eine Mehrzahl von dreidimensionalen Scheitelpunkten umfasst und ferner Flächenelemente zwischen den Scheitelpunkten umfasst, die eine dreidimensionale Fläche bilden, wobei das Verfahren die folgenden Schritte umfasst, die von einer Verarbeitungseinheit ausgeführt werden:

- Bestimmen (200) einer Krümmungskarte der dreidimensionalen Fläche, wobei Punkte der Krümmungskarte den Punkten der dreidimensionalen Fläche entsprechen,
- Lokalisieren (300), auf der Krümmungskarte, einer Nasenspitze (B), an der die dreidimensionale Fläche eine vorbestimmte Krümmung aufweist,
- anhand des dreidimensionalen Netzes, das auf die Nasenspitze (B) zentriert ist, Bestimmen (400) einer Gesichtshaltung, wobei die Haltung von Koordinaten der Nasenspitze (B) definiert ist, durch einen ersten Drehwinkel des Gesichts um eine erste Achse (X), durch einen zweiten Drehwinkel des Gesichts um eine zweite Achse (Y), und durch einen dritten Drehwinkel des Gesichts um eine dritte Achse (Z),
- Eingrenzen eines Gesichtsbereichs, der von dreidimensionalen Scheitelpunkten des Netzes gebildet ist, die in Abhängigkeit von ihrer Position bezogen auf die Nasenspitze (B) ausgewählt sind, und Vergleichen (450) zwischen dem eingegrenzten Gesichtsbereich und einem Referenzgesichtsmodell, das ein vorab gespeichertes dreidimensionales Netz eines durchschnittlichen Gesichts umfasst, wobei ein Ergebnis des Vergleichs ermöglicht, eine Detektion eines wirklichen Gesichts im dreidimensionalen Netz zu bestätigen und die Relevanz der Nasenspitze (B) zu bestätigen.

2. Verfahren nach Anspruch 1, wobei beim Schritt des Bestimmens (200) der Krümmungskarte eine erste Krümmungskarte für eine mittlere Krümmung erstellt wird und eine zweite Krümmungskarte für eine gaußsche Krümmung erstellt wird.

3. Verfahren nach Anspruch 2, wobei der Schritt des Lokalisierens (300) das Bestimmen einer Region der dreidimensionalen Fläche umfasst, deren mittlere Krümmung ($A_x$) der Punkte zwischen einer mittleren Untergrenze ($m^a$) und einer mittleren Obergrenze ($M^a$) liegt, und deren gaußsche Krümmung ($G_x$) der Punkte zwischen einer gaußschen Untergrenze ($m^g$) und einer gaußschen Obergrenze ($M^g$) liegt.

4. Verfahren nach Anspruch 3, wobei mehrere Regionen der dreidimensionalen Fläche, die nicht paarweise zusammenhängend sind, beim Schritt des Lokalisierens (300) lokalisiert werden und Kandidatenregionen bilden, wobei der Mittelpunkt einer der Regionen größerer Größe aus den Kandidatenregionen als die Nasenspitze bestimmt wird.

5. Verfahren nach einem der Ansprüche 1 bis 4, wobei der Schritt des Lokalisierens (300) der Nasenspitze ohne vorhergehende Detektion eines Gesichtsbereichs weder im dreidimensionalen Netz noch in der Krümmungskarte durchgeführt wird.

6. Verfahren nach einem der Ansprüche 1 bis 5, wobei das Berechnen wenigstens zweier Winkel von den drei Drehwinkeln das Bestimmen (410) einer Teilsymmetrieebene (P) der dreidimensionalen Fläche umfasst, die durch die Nasenspitze (B) verläuft.

7. Verfahren nach Anspruch 6, wobei das Berechnen wenigstens eines Winkels von den drei Drehwinkeln das Lokalisieren (420) einer Nasenwurzel (D) in der dreidimensionalen Fläche umfasst, wobei die Nasenwurzel (D) vorzugsweise als der Punkt maximaler Krümmung entlang eines Profils (PR) an der Schnittlinie zwischen der Teilsymmetrieebene (P) und dem dreidimensionalen Netz lokalisiert wird.

8. Haltungsbestimmungsverfahren nach den Ansprüchen 4 und 7 in Kombination, umfassend eine Bestimmen, dass die Region größter Größe in wenigstens einem der folgenden Fälle die Nasenspitze nicht enthält:

   - nach der Berechnung eines symmetrischen Netzes, das das Bild des dreidimensionalen Netzes gemäß der Teilsymmetrieebene (P) ist, wenn ein kumulierter Abstand zwischen den Punkten des dreidimensionalen Netzes und den entsprechenden Punkten des symmetrischen Netzes eine Schwelle überschreitet;
   - wenn der Punkt minimaler Krümmung entlang des Profils, der als eine verfeinerte Schätzung der Nasenspitze gilt, zu weit vom Mittelpunkt der Region größter Größe entfernt ist oder wenn die Krümmung des Punkts minimaler Krümmung nicht in einem vorbestimmten Intervall enthalten ist;
   - wenn die Krümmung der Nasenwurzel entlang eines Profils des Gesichts nicht in einem zweiten vorbestimmten Intervall enthalten ist;
   - wenn ein Abstand zwischen der Nasenwurzel und der Nasenspitze nicht in einem dritten vorbestimmten Intervall enthalten ist,

   wobei das Bestimmen vorzugsweise vor dem Vergleichen (450) mit dem Referenzgesichtsmodell durchgeführt wird, wobei die Schritte des Lokalisierens (300) und Berechnens (400) der drei Drehwinkel dann wiederholt werden, wobei die Region größter Größe aus den Kandidatenregionen herausgenommen wird.

9. Verfahren nach einem der Ansprüche 6 bis 8, umfassend zusätzliche Schritte des Berechnens (411) eines optischen Flusses zwischen Punkten einer zweidimensionalen Projektion des dreidimensionalen Netzes und Punkten einer zweidimensionalen Projektion eines zuvor berechneten Bild-Netzes des dreidimensionalen Netzes gemäß einer Ebene, die durch die Nasenspitze (B) verläuft, und des Korrigierens (412) der Gesichtshaltung in Abhängigkeit von dem berechneten optischen Fluss.

10. Verfahren nach einem der Ansprüche 1 bis 9, umfassend vorausgehende Schritte des Erfassens (100) einer Tiefenkarte einer Szene durch einen dreidimensionalen Sensor und des Berechnens (150) des dreidimensionalen Netzes anhand der Tiefenkarte.

11. Verfahren zur Erzeugung einer Vorderansicht einer Person anhand einer Tiefenkarte, umfassend die Durchführung eines Verfahrens nach Anspruch 10, in dessen Verlauf die Detektion eines wirklichen Gesichts bestätigt wird,

   und umfassend einen zusätzlichen Schritt des Anwendens (500) einer Drehung gemäß den drei zuvor bestimmten Drehwinkeln auf das dreidimensionale Netz, der ein Frontalnetz ergibt.

12. Verfahren zur Kontrolle der Identität einer Person, umfassend die Durchführung eines Verfahrens zur Erzeugung einer Vorderansicht der Person nach Anspruch 11

   und umfassend einen zusätzlichen Schritt des Vergleichens (600) zwischen wenigstens einem Bild des Frontalnetzes und wenigstens einem Bild eines dreidimensionalen Referenznetzes, das zuvor an der Person auf zertifizierte Weise erfasst wurde, wobei das Bild des Frontalnetzes und das Bild des dreidimensionalen Referenznetzes aus einem der vier folgenden Kanäle genommen werden:

      - Tiefenkarte, die den Netzen zugeordnet ist;
      - und/oder Karte einer Komponente gemäß der dritten Achse (Z) der Normalen zur dreidimensionalen Fläche in den Netzen;
      - und/oder Karte für mittlere Krümmung entlang der Netze;
      - und/oder Karte für gaußsche Krümmung entlang der Netze,

   wobei die Person in Abhängigkeit vom Ergebnis des Vergleichs als wirksam identifiziert gilt oder nicht.

13. Identitätskontrollverfahren nach Anspruch 12, wobei das Frontalnetz und das dreidimensionale Referenznetz nach jedem der vier Kanäle verglichen werden.

**14.** Identitätskontrollverfahren nach einem der Ansprüche 12 oder 13, wobei das Vergleichen (600) von einer Verarbeitungseinheit durchgeführt wird, die ein erstes faltendes neuronales Netz (N1) umfasst, dessen Parameter durch automatisches Lernen gelernt wurden.

**15.** System zur Bestimmung einer Gesichtshaltung, umfassend:

- eine Erfassungseinheit (SA), die einen dreidimensionalen Sensor (C) umfasst, der dazu ausgebildet ist, eine Tiefenkarte zu erfassen,
- eine Verarbeitungseinheit (ST), die dazu ausgebildet ist, ein Verfahren nach einem der Ansprüche 1 bis 14 so durchzuführen, dass ein Gesicht detektiert wird und eine Gesichtshaltung anhand der Tiefenkarte bestimmt wird.

**16.** Computerprogrammprodukt umfassend Code-Anweisungen, die die Durchführung eines Verfahrens nach einem der Ansprüche 1 bis 14 ermöglichen, wenn die Code-Anweisungen von einer Verarbeitungseinheit ausgeführt werden.

**17.** Computerlesbare Speichermittel, auf denen Code-Anweisungen vorab gespeichert sind, die die Durchführung eines Verfahrens nach einem der Ansprüche 1 bis 14 ermöglichen.

**Claims**

**1.** Method for achieving facial detection and facial posture determination, based on a three-dimensional mesh comprising a plurality of three-dimensional peaks and further comprising surface elements between said peaks forming a three-dimensional surface,
the method comprising the following steps executed by a processing unit:

- determining (200) a curvature map of the three-dimensional surface, points of the curvature map corresponding to the points of the three-dimensional surface,
- identifying (300), in the curvature map, an end (B) of the nose at which the three-dimensional surface has a predetermined curvature,
- based on the three-dimensional mesh centred on the end (B) of the nose, determining (400) a facial posture, the posture being defined by coordinates of the end (B) of the nose, by a first angle of rotation of the face about a first axis (X), by a second angle of rotation of the face about a second axis (Y), and by a third angle of rotation of the face about a third axis (Z),
- demarcating a facial zone made up of three-dimensional peaks of the mesh, these being selected depending on their position with respect to the end (B) of the nose, and comparing (450) the demarcated facial zone and a reference facial template comprising a pre-recorded three-dimensional mesh of an average face, a result of the comparison making it possible to validate detection of a real face in the three-dimensional mesh and to validate the relevance of the end (B) of the nose.

**2.** Method according to Claim 1, wherein, in the curvature-map determining step (200), a first curvature map is generated for a mean curvature and a second curvature map is generated for a Gaussian curvature.

**3.** Method according to Claim 2, wherein the identifying step (300) comprises determining a region of the three-dimensional surface the mean curvature ($A_x$) of the points of which is comprised between a mean lower limit ($m^a$) and a mean upper limit ($M^a$), and the Gaussian curvature ($G_x$) of the points of which is comprised between a Gaussian lower limit ($m^g$) and a Gaussian upper limit ($Mg$).

**4.** Method according to Claim 3, wherein a plurality of regions of the three-dimensional surface, which do not adjoin pairwise, are identified in the identifying step (300) and form candidate regions, the centre of one of the regions of larger size among said candidate regions being determined to be the end of the nose.

**5.** Method according to one of Claims 1 to 4, wherein the step (300) of identifying the end of the nose is implemented without prior detection of a facial region in the three-dimensional mesh or in the curvature map.

**6.** Method according to one of Claims 1 to 5, wherein computing at least two angles among the three angles of rotation comprises determining (410) a plane (P) of partial symmetry of the three-dimensional surface passing through the end (B) of the nose.

**7.** Method according to Claim 6, wherein computing at least one angle among the three angles of rotation comprises identifying (420) a bridge (D) of the nose in the three-dimensional surface, the bridge (D) of the nose preferably being identified as the point of maximum curvature along a profile (PR) at the intersection between the plane (P) of partial symmetry and the three-dimensional mesh.

**8.** Method for achieving posture determination according to Claims 4 and 7 in combination, comprising determining that the region of largest size does not contain the end of the nose in at least one of the following cases:

- after computing a symmetric mesh that is the image of the three-dimensional mesh in the plane (P) of partial symmetry, if a cumulative distance between the points of the three-dimensional mesh and the corresponding points of the symmetric mesh exceeds a threshold;
- if the point of minimum curvature along the profile, considered to be a refined estimation of the end of the nose, is too far from the centre of the region of largest size or if the curvature of said point of minimum curvature is not comprised in a predetermined interval;
- if the curvature of the bridge of the nose along a profile of the face is not comprised in a second predetermined interval;
- if a distance between the bridge of the nose and the end of the nose is not comprised in a third predetermined interval,

said determining preferably being carried out before comparing (450) the reference facial template, the identifying step (300) and the step (400) of computing the three angles of rotation then being reiterated, leaving the region of largest size of the candidate regions.

9. Method according to one of Claims 6 to 8, comprising additional steps of computing (411) an optical flow between points of a two-dimensional projection of the three-dimensional mesh and points of a two-dimensional projection of a mesh that is an image of the three-dimensional mesh in a plane passing through the end of the nose (B) computed beforehand, and of correcting (412) the facial posture depending on the computed optical flow.

10. Method according to one of Claims 1 to 9, comprising preliminary steps of acquiring (100), using a three-dimensional sensor, a depth map of a scene and of computing (150) the three-dimensional mesh based on said depth map.

11. Method for generating a face-on view of an individual, based on a depth map, comprising implementing a method according to Claim 10, in which method detection of a real face is validated, and comprising an additional step (500) of applying, to the three-dimensional mesh, a rotation about the three angles of rotation determined beforehand, resulting in a face-on oriented mesh.

12. Method for checking the identity of an individual, comprising implementing a method for generating a face-on view of the individual according to Claim 11,

and comprising an additional step of comparing (600) at least one image of the face-on oriented mesh and at least one image of a reference three-dimensional mesh acquired beforehand on the individual in a certified manner, the image of the face-on oriented mesh and the image of the reference three-dimensional mesh being taken from among one of the four following channels:

- depth map associated with said meshes;
- and/or map of a component along the third axis (Z) of the normals to the three-dimensional surface in said meshes;
- and/or map of mean curvature along said meshes;
- and/or map of Gaussian curvature along said meshes,

the individual being considered to have been validly identified or not depending on the result of the comparison.

13. Method for checking identity according to Claim 12, wherein the face-on oriented mesh and the reference three-dimensional mesh are compared using each of the four channels.

14. Method for checking identity according to either of Claims 12 and 13, wherein the comparison (600) is made by a processing unit comprising a first convolutional neural network (N1) the parameters of which were learnt by machine learning.

15. System for achieving determination of posture of a face, comprising:

- an acquiring unit (SA) comprising a three-dimensional sensor (C) configured to acquire a depth map,
- a processing unit (ST) configured to implement a method according to one of Claims 1 to 14, so as to detect a face and determine a posture of the face based on the depth map.

16. Computer program product comprising code instructions allowing a method according to one of Claims 1 to 14 to be implemented, when said code instructions are executed by a processing unit.

17. Computer-readable storage means on which are pre-recorded code instructions allowing a method according to one of Claims 1 to 14 to be implemented.

FIG. 1

**FIG. 2**

10

Acquisition de carte de profondeur ⌐100

Calcul de maillage tridimensionnel ⌐150

M

Détermination de carte de courbure ⌐200

Ca,Cg

Détermination du bout du nez ⌐300

B

Détermination de la pose de visage ⌐400

Calcul de maillage symétrique selon un plan P ⌐410

Calcul d'un flux optique avec le maillage symétrique ⌐411

Détermination d'une pose de visage améliorée ⌐412

aP,aR,aL

Détection d'une zone de visage et comparaison avec un gabarit de visage de référence ⌐450

## FIG. 3

**FIG. 4b**

**FIG. 4a**

**FIG. 5**

Ca,Cg

300

**Détermination du bout du nez**

| Repérage de régions candidates selon la condition de courbure | 310 |

Z1, ..., Zn

| Sélection du bout B du nez | 320 |

B

400

**Détermination des angles de rotation**

| Alignement du maillage avec un maillage symétrique selon un plan **P** | 410 |

aR,aL

| Détermination de l'angle de pas à l'aide d'un pont **D** du nez | 420 |

aP

Rejet éventuel
de la zone candidate
contenant le candidat
de bout du nez

EP 3 614 306 B1

EP 3 614 306 B1

FIG. 7a

FIG. 7c

FIG. 7b

# FIG. 8

EP 3 614 306 B1

## FIG. 9

**FIG. 10**

Détermination de pose du visage — 10

B,aP,aR,aL

Frontalisation du maillage tridimensionnel — 500

MF

Comparaison de canaux 3D du maillage frontalisé avec un maillage de référence certifié — 600

Comparaison d'un canal 2D du maillage frontalisé avec un maillage de référence certifié — 610

OK / KO

FIG. 11

Carte de profondeur

Z-normale

Courbure gaussienne

Courbure moyenne

EP 3 614 306 B1

## RÉFÉRENCES CITÉES DANS LA DESCRIPTION

**Documents brevets cités dans la description**

- US 7436988 B2

**Littérature non-brevet citée dans la description**

- 3-D Face Detection, Landmark Localization, and Registration Using a Point Distribution Model. **NAIR et al.** IEEE TRANSACTIONS ON MULTIMEDIA. IEEE SERVICE CENTER, 01 Juin 2009, vol. 11, 611-623

- A comparison of gaussian and mean curvatures estimation methods on triangular meshes. **SURAZHSKY, T. ; MAGID, E. ; SOLDEA, O. ; ELBER, G. ; RIVLIN, E.** Robotics and Automation, 2003. Proceedings. ICRA'03. IEEE, vol. 1, 1021-1026
- **P.J. BESL ; N.D. MCKAY.** A Method for Registration of 3D Shapes. *IEEE Transactions on Pattern Analysis and Machine Intelligence,* 1992, vol. 14 (2), 239-256